# EUROPÄISCHE PATENTSCHRIFT

(11) **EP 0 860 573 B1**
(45) Veröffentlichungstag und Bekanntmachung des Hinweises auf die Patenterteilung: **11.09.2002**
(21) Anmeldenummer: 97120586.9
(22) Anmeldetag: 25.11.1997
(51) Int. Cl.: E05F 15/16, E05F 11/48, H02K 7/116, F16H 1/16, F16B 1/00

(54) **Elektromotorische Antriebsvorrichtung**
Drive with electromotor
Dispositif de commande à moteur électrique

(30) Priorität: 21.02.1997 DE 19706871
(43) Veröffentlichungstag der Anmeldung: 26.08.1998
(73) Patentinhaber: ROBERT BOSCH GMBH, 70442 Stuttgart (DE)
(72) Erfinder: Moskob, Frank, 77815 Bühl (DE); Dreier, Friedrich-Wilhelm, 76547 Sinzheim (DE); Kurzmann, Rainer, 77855 Achern (DE)

(56) Entgegenhaltungen:
- EP-A- 0 360 911
- DE-U- 8 812 399

## Beschreibung

### Stand der Technik

Die Erfindung betrifft eine elektromotorische Antriebsvorrichtung für Abdeckglieder von Öffnungen in Fahrzeugen, wie Fensterscheiben, Schiebedächer u.dgl., der im Oberbegriff des Anspruchs 1 definierten Gattung.

Bei einer als elektrischer Fensterheberantrieb für einen Seilzugfensterheber ausgebildeten elektromotorischen Antriebsvorrichtung dieser Art (DE 29 15 669 A1, Fig. 3), sitzt das Schneckenrad freidrehend auf einer in den Boden des topfförmigen Getriebegehäuses einseitig eingepreßten Lagerhülse, die frei auskragend in das Gehäuseinnere vorsteht. Ebenfalls freidrehend sitzt auf der Lagerhülse ein die Seiltrommel an das Schneckenrad drehfest ankoppelnder Mitnehmer, der mit einer Mitnehmerklaue in eine mit einer dämpfenden Auskleidung versehenen Aussparung im Schneckenrad axial hineinragt und mit einer zweiten Mitnehmerklaue axial in eine Lochscheibe formschlüssig eingreift. Die Lochscheibe sitzt drehfest auf einer durch die Lagerhülse hindurchgeführten Welle, auf der auch die Seiltrommel drehfest gehalten ist. Beim Drehen des Schneckenrads nimmt dieses über den Mitnehmer die Lochscheibe mit, die ihrerseits die Welle und damit die Seiltrommel dreht. Seiltrommel und Getriebegehäuse sind von einem haubenförmigen Getriebedeckel überdeckt, der zwei Radialöffnungen zum Durchtritt des auf den Umfang der Seiltrommel aufgewickelten Seils aufweist. Das in einem Rohr geführte Seil bildete eine am Fensterheber befestigte Schlinge, die über die angetriebene Seiltrommel verschoben wird und so das mit dem Fensterheber verbundene Fenster bewegt.

### Vorteile der Erfindung

Die erfindungsgemäße elektromotorische Antriebsvorrichtung mit den kennzeichnenden Merkmalen des Anspruchs 1 hat demgegenüber den Vorteil, daß durch die konstruktive Gestaltung von Lagerhülse und Schneckenrad eine Teilereduzierung und eine vereinfachte Montage erzielt wird, was sich in der Verringerung der Fertigungskosten auswirkt. Die axiale Bauhöhe der Vorrichtung kann wesentlich kleiner gehalten werden, so daß der vorzuhaltende Einbauraum im Kraftfahrzeug reduziert werden kann, was bei der ständig anstehenden Forderungen nach Kompaktfahrzeugen mit großem Innenraumangebot von wesentlichem Vorteil ist. Durch die Teilereduzierung und die Herstellung von Getriebegehäuse, Schneckenrad und Seiltrommel aus Kunststoff kann das Gewicht der Antriebsvorrichtung wesentlich gesenkt werden.

Durch die in den weiteren Ansprüchen aufgeführten Maßnahmen sind vorteilhafte Weiterbildungen und Verbesserungen der im Anspruch 1 angegebenen elektromotorischen Antriebsvorrichtung möglich.

### Zeichnung

Die Erfindung ist anhand eines in der Zeichnung dargestellten Ausführungsbeispiels in der nachfolgenden Beschreibung näher erläutert. Dabei zeigt die Zeichnung ausschnittweise einen Axialschnitt einer elektromotorischen Antriebsvorrichtung für einen Seilzugfensterheber.

### Beschreibung des Ausführungsbeispiels

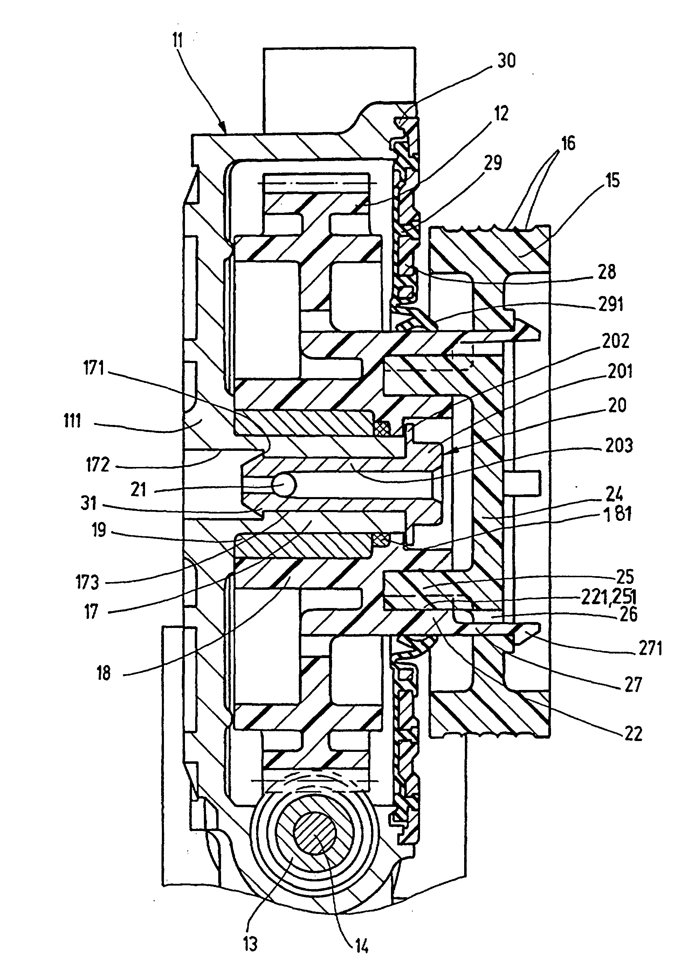

Die in Fig. 1 ausschnittweise im Axialschnitt dargestellte elektromotorische Antriebsvorrichtung für einen Seilzugfensterheber einer Seitenscheibe in der Fahrzeugtür eines Kraftfahrzeugs weist ein aus Kunststoff gespritztes topfförmiges Getriebegehäuse 11 auf, in dem ein Schneckengetriebe, bestehend aus einem Schneckenrad 12 und einer Schnecke 13, aufgenommen ist. Die Schnecke 13 ist auf einer Abtriebswelle 14 eines hier nicht zu sehenden Elektromotors befestigt oder einstückig integriert, dessen Rotor drehfest auf der Abtriebswelle 14 sitzt und koaxial im Stator aufgenommen ist. Zum Antrieb des Fensterhebers ist ein hier nicht dargestelltes Seil auf dem Umfang einer Seiltrommel 15 aufgewickelt und als Seilschlinge zu dem Fensterheber geführt. Durch Drehen der Seiltrommel 15 in die eine oder andere Drehrichtung wird die Seilschlinge verschoben und damit der Fensterheber auf- oder abwärts bewegt. Zum Aufwickeln des Seils ist am Umfang der Seiltrommel 15 eine spiralförmig über den Umfang verlaufende Wickelrille 16 ausgebildet, in der das Seil zumindest teilweise einliegt.

Die Seiltrommel 15 wird von dem zur Drehbewegung von der Schnecke 13 angetriebenen Schneckenrad 12 je nach Drehrichtung des Elektromotors in die eine oder andere Richtung gedreht. Hierzu ist die Seiltrommel 15 mit dem Schneckenrad 12 drehfest verbunden und das Schneckenrad 12 auf einer im Boden 111 des topfförmigen Getriebegehäuses 11 einstückig angeformten Lagerhülse 17 mit einer aufgepreßten Lagerbuchse 19 freidrehend gelagert. Das Schneckenrad 12 trägt hierzu eine konzentrische Nabe 18 mit radialem Drehspiel zur Lagerbuchse 19. Die Lagerbuchse 19 reicht von dem Boden 111 des Getriebegehäuses 11 bis an die Schulter der Nabe 18 mit Dichtung 181. Die Nabe 18 reicht bis an die vom Boden 111 abgekehrte freie Stirnseite der Lagerhülse 17 und ist auf der Lagerhülse 17 mit geringem axialem Spiel durch einen in die Lagerhülse 17 stirnseitig eingeschobenen Sicherungsstift 20 gehalten. Der Sicherungsstift 20 weist einen Kopf 201, an dem ein die Stirnseiten von Lagerhülse 17 und Nabe 18 übergreifender Ringflansch 202 ausgebildet ist, und einen Schaft 203 auf dessen kopffernes Ende radial einfedernde Schnapphaken 31 trägt. Die Schnapphaken 31 schnappen bei in die Lagerhülse 17 eingestecktem Sicherungsstift 20 hinter einer an der Innenwand der Lagerhülse 17 ausgebildeten, radialen Ringschulter 171 ein. Die Ringschulter 171 wird von dem Übergang zweier, in der Lagerhülse 17 ausgebildeter Hülsenabschnitte 172 und 173 mit unterschiedlich großem lichtem Durchmesser gebildet. Zur Festlegung des Sicherungsstiftes 20 in der Lagerhülse 17 gegen axiales Herausziehen kann zwischen den Schnapphaken 203 noch ein Sicherungsdübel 21 eingedreht werden, so daß die die Ringschulter 171 hintergreifenden Schnapphaken 203 nicht wieder nach innen einfedern können.

Anstelle des Sicherungsstiftes 20 kann auch eine Kopfschraube verwendet werden, die dann mit einem Schraubengewinde in ein in der Lagerhülse 17 eingedrehtes Innengewinde eingeschraubt wird.

Zur drehfesten Aufnahme der Seiltrommel 15 trägt das Schneckenrad 12 auf seiner vom Boden 111 des Getriebegehäuses 11 abgekehrten Seite einen zur Nabe 18 konzentrisch angeordneten Aufnahmestutzen 22 für die Seiltrommel 15.Der Aufnahmestutzen 22 ist mit einer Innenverzahnung 221 versehen.

Die Seiltrommel 15 ist von einem scheibenförmigen Tragsteg 24aufgenommen, der einstückig mit der Seiltrommel 15 ausgebildet ist. An diesem Tragsteg 24 ist ein Zylinder 25 mit einer Außenverzahnung 251 so angeformt, daß sie formschlüssig in die Innenverzahnung 221 des Aufnahmestutzens 22 eingesteckt werden kann. Zusätzlich weist der Tragsteg 24 noch Durchgangsöffnungen 26 und der Aufnahmestutzen 22 noch axial vorspringende, radial einfedernde Federstege 27 auf, die endseitig mit einer Hintergreifungsnase 271 versehen sind. Beim Einstecken des Zylinders 25 mit der Außenverzahnung 251 in die Innenverzahnung 221 im Aufnahmestutzen 22 treten die Federstege 27 durch die Durchgangsöffnungen 26 hindurch und die Hintergreifungsnasen 271 übergreifen den Tragsteg 24 auf dessen vom Aufnahmestutzen 22 abgekehrter Seite, so daß die Seiltrommel 15 auf dem Schneckenrad 12 axial festgespannt ist. Das Schneckenrad 12 mit Aufnahmestutzen 22 und Nabe 18 ist ebenso wie die Seiltrommel 15 mit Tragsteg 24 und Zylinder 25 als Kunststoffspritzgußteil ausgeführt.

Das topfförmige Getriebegehäuse 11 ist mit einem Gehäusedeckel 28 aus Kunststoff abgedeckt, der den Aufnahmestutzen 22 für die Seiltrommel 15 mit Radialabstand umschließt. Auf der dem Gehäuseinnenraum zugekehrten Unterseite des Gehäusedeckels 28 ist eine Dichtungsscheibe 29 befestigt, die an ihrem inneren Rand zu einem Dichtungswulst 291 ausgeformt ist, der im Ringspalt zwischen Gehäusedeckel 28 und Aufnahmestutzen 22 einliegt und sich an den Aufnahmestutzen 22 andrückt. Der Gehäusedeckel 28 ist in eine am Getriebegehäuse 11 ausgebildete, ringförmige Ausnehmung 30 eingelegt und am Getriebegehäuse 11 verschraubt oder verschweißt.

Bei der Montage der Antriebsvorrichtung wird zunächst das Schneckenrad 12 auf die Lagerhülse 17 mit Lagerbuchse 19 aufgesetzt und mittels des Sicherungsstiftes 20 auf der Lagerhülse 17 mit Drehspiel festgelegt.
Dann wird der Gehäusedeckel 28 mit dem

Dichtungswulst 291 seiner an der Unterseite befestigten Dichtungsscheibe 29 über den Aufnahmestutzen 22 am Schneckenrad 12 geschoben, in die Ausnehmung 30 im Getriebegehäuse 11 eingelegt und am Getriebegehäuse 11 festgeschraubt oder verschweißt. Danach wird die Seiltrommel 15 mit der Außenverzahnung 251 am Zylinder 25 in die Innenverzahnung 221 des Aufnahmestutzens 22 eingesteckt, wobei die Federstege 27 durch die Durchgangsöffnungen 26 hindurchtreten und mit ihren Hintergreifungsnasen 271 auf die von dem Aufnahmestutzen 22 abgekehrte Rückseite des Tragstegs 24 einschnappen. Die Seiltrommel 15 ist damit sowohl axial als auch in Drehrichtung unverschieblich am Schneckenrad 12 festgelegt.

## Patentansprüche

1. Elektromotorische Antriebsvorrichtung für Abdeckglieder von Öffnungen in Fahrzeugen, wie Fensterscheiben, Schiebedächer u. dgl., mit einem topfförmigen Getriebegehäuse (11), mit einem im Getriebegehäuse (11) aufgenommenen Schneckengetriebe, das ein auf einer im Boden (111) des Getriebegehäuses (11) gehaltenen, frei auskragenden, hohlzylindrischen Lagerhülse (17) freidrehend sitzendes Schneckenrad (12) aufweist, und mit einer vom Schneckenrad (12)gedrehten Seiltrommel (15), auf deren Umfang ein Seil zum Antrieb des Abdeckglieds aufgewickelt ist, **dadurch gekennzeichnet, daß** die Lagerhülse (17) einstückig an dem Gehäuseboden (111) des Getriebegehäuses (11) angeformt ist, daß das Schneckenrad (12) auf der Lagerhülse (17) mittels eines in die Stirnseite der Lagerhülse (17) einsteckbaren Sicherungselements (20) auf der Lagerhülse (17) gesichert ist und daß das Schneckenrad (12) auf seiner vom Gehäuseboden (111) abgekehrten Seite einen Aufnahmestutzen (22) aufweist, auf den die Seiltrommel (15) aufgesteckt ist.

2. Vorrichtung nach Anspruch 1, **dadurch gekennzeichnet, daß** zur Begrenzung des axialen Spiels des Schneckenrads (12) auf der Lagerhülse (17) am Schneckenrad (12) eine koaxiale Nabe (18) ausgeformt ist, die mit ihren beiden axialen Stirnseiten mit geringem Axialspiel einerseits am Gehäuseboden (111) und andererseits am Sicherungselement (20) anliegt.

3. Vorrichtung nach Anspruch 2, **dadurch gekennzeichnet, daß** an der Innenwand der Lagerhülse (17) eine radial vorspringende Ringschulter (171) ausgebildet ist und daß das Sicherungselement als Sicherungsstift (20) mit Kopf (201) und Schaft (203) ausgebildet ist, der an seinem kopffernen Schaftende radial einfedernde Schnapphaken (31) trägt, die nach Einführen des Sicherungsstiftes (20) in die Lagerhülse (17) bis zum Anschlag seines Kopfes (201) an der Stirnseite der Lagerhülse (17) die Ringschulter (171) hintergreifen.

4. Vorrichtung nach Anspruch 3, **dadurch gekennzeichnet, daß** die Ringschulter (171) vom Übergang zweier in der Lagerhülse (17) ausgebildeter Hülsenabschnitte (172,173) mit unterschiedlich großem lichten Durchmesser gebildet ist.

5. Vorrichtung nach-einem der Ansprüche 2 - 4, **dadurch gekennzeichnet, daß** Nabe (18) und Seiltrommel-Aufnahmestutzen (22) einstückig an dem als Kunststoffspritzteil hergestellten Schneckenrad (14) angespritzt sind.

6. Vorrichtung nach einem der Ansprüche 2 - 5, **dadurch gekennzeichnet, daß** auf die Lagerhülse (17) eine in der Nabe (18) mit radialem Drehspiel sitzende Lagerbuchse (19) aufgesetzt, vorzugsweise aufgepreßt, ist.

7. Vorrichtung nach einem der Ansprüche 1 - 6, **dadurch gekennzeichnet, daß** der Seiltrommel-Aufnahmestutzen (22) an seinem freien Ende axial vorstehende Federstege (27) mit Hintergreifungsnasen (221) trägt, die die Seiltrommel (15) auf dem Aufnahmestutzen (22) axial festspannen.

8. Vorrichtung nach Anspruch 7, **dadurch gekennzeichnet, daß** die Seiltrommel (15) von einem mit der Seiltrommel (15) einstückig ausgebildeten Tragsteg (24) gehalten ist, wobei an dem Tragsteg (24) ein Zylinder (25) mit einer Außenverzahnung (251) so angeformt ist, daß sie formschlüssig in eine Innenverzahnung (221) des Aufnahmestutzens (22) eingesteckt werden kann, und daß im Tragsteg (24) Durchgangsöffnungen (26) für die Federstege (27) vorgesehen sind, deren Hintergreifungsnasen (271) den Tragsteg (24) auf seiner vom Schneckenrad (12) abgekehrten Rückseite radial übergreifen.

9. Vorrichtung nach einem der Ansprüche 1 - 8, **dadurch gekennzeichnet, daß** das Getriebegehäuse (11) von einem den Seiltrommel-Aufnahmestutzen (22) mit Radialabstand umschließenden Gehäusedeckel (28) abgeschlossen ist und daß der Gehäusedeckel (28) gegenüber dem Aufnahmestutzen (22) abgedichtet ist.

10. Vorrichtung nach Anspruch 9, **dadurch gekennzeichnet, daß** die dem Getriebegehäuse (11) zugekehrte Unterseite des Gehäusedeckels (28) mit einer ringförmigen Dichtungsscheibe (29) überdeckt ist, die an ihrem inneren Rand einen im Ringspalt zwischen Gehäusedeckel (28) und Aufnahmestutzen (22) einliegenden, sich an den Außenmantel des Aufnahmestutzens (22) andrückenden Dichtungswulst (291) aufweist.

## Claims

1. Electromotive drive device for covering members of apertures in vehicles, such as window panes, sliding roofs and the like, with a bowl-shaped gear case (11), with a worm gear which is received in the gear case (11) and has a worm wheel (12) seated freely rotatably on a freely projecting hollow-cylindrical bearing sleeve (17) held in the bottom (111) of the gear case (11), and with a rope drum (15) which is rotated by the worm wheel (12) and on the circumference of which a rope for driving the covering member is wound, **characterized in that** the bearing sleeve (17) is integrally formed in one piece on the case bottom (111) of the gear case (11), **in that** the worm wheel (12) is secured on the bearing sleeve (17) by means of a securing element (20) capable of being inserted into the end face of the bearing sleeve (17), and **in that** the worm wheel (12) has, on its side facing away from the case bottom (111), a receiving connection piece (22), onto which the rope drum (15) is slipped.

2. Device according to Claim 1, **characterized in that**, to limit the axial play of the worm wheel (12) on the bearing sleeve (17), the worm wheel (12) has shaped on it a coaxial hub (18) which bears with its two axial end faces, with slight axial play, on the one hand, against the case bottom (111) and, on the other hand, against the securing element (20).

3. Device according to Claim 2, **characterized in that** a radially projecting angular shoulder (171) is formed on the inner wall of the bearing sleeve (17), and **in that** the securing element is designed as a securing pin (20) with a head (201) and a shank (203), the said securing pin carrying, at its shank end remote from the head, radially resilient snap hooks (31) which, after the securing pin (20) is introduced into the bearing sleeve (17) until its head (201) butts against the end face of the bearing sleeve (17), engage behind the annular shoulder (171).

4. Device according to Claim 3, **characterized in that** the annular shoulder (171) is formed by the transition of two sleeve portions (172, 173) formed in the bearing sleeve (17) and having a clear diameter of different size.

5. Device according to one of Claims 2 - 4, **characterized in that** the hub (18) and the rope-drum receiving connection piece (22) are injection-moulded in one piece on the worm wheel (14) produced as a plastic injection moulding.

6. Device according to one of Claims 2 - 5, **characterized in that** a bearing bush (19) seated with radial rotational play in the hub (18) is placed, preferably pressed, onto the bearing sleeve (17).

7. Device according to one of Claims 1 - 6, **characterized in that** the rope-drum receiving connection piece (22) carries, at its free end, axially projecting spring webs (27) with engage-behind noses (221) which clamp the rope drum (15) axially on the receiving connection piece (22).

8. Device according to Claim 7, **characterized in that** the rope drum (15) is held by a carrying web (24) produced in one piece with the rope drum (15), a cylinder (25) with an external toothing (251) being integrally formed on the carrying web (24) in such a way that the said external toothing can be inserted with a form fit into an internal toothing (221) of the receiving connection piece (22), and **in that** the carrying web (24) has provided in it passage orifices (26) for the spring webs (27), the engage-behind noses (271) of which engage radially over the carrying web (24) on its rear side facing away from the worm wheel (12).

9. Device according to one of Claims 1 - 8, **characterized in that** the gear case (11) is closed off by a case cover (28) surrounding the rope-drum receiving connection piece (22) with radial clearance, and **in that** the case cover (28) is sealed off relative to the receiving connection piece (22).

10. Device according to Claim 9, **characterized in that** the underside, facing the gear case (11), of the case cover (28) is covered with an annular sealing disc (29) which has along its inner edge a sealing bead (291) seated in the annular gap between the case cover (28) and the receiving connection piece (22) and pressing against the outer casing of the receiving connection piece (22).

## Revendications

1. Dispositif d'entraînement à moteur électrique pour des éléments de recouvrement d'ouvertures de véhicules tels que des vitres de fenêtre, des toits coulissants ou des moyens analogues, comportant un boîtier de transmission (11) en forme de pot, une transmission à vis logée dans le boîtier de transmission (11) ayant une roue à vis (12) montée libre en rotation sur un manchon de palier (17) cylindrique creux, tenu par le fond (111) du boîtier de transmission (11) et en porte-à-faux, ainsi qu'un tambour à câble (15) entraîné en rotation par la roue à vis (12) dont la périphérie reçoit un câble pour entraîner l'élément de recouvrement,
**caractérisé en ce que**
le manchon de palier (17) fait corps avec le fond (111) du boîtier de transmission (11),
la roue à vis (12) est fixée sur le manchon de palier (17) à l'aide d'un élément de fixation (20) engagé dans la face frontale du manchon de palier (17) et
la roue à vis (12) comporte sur son côté opposé au fond de boîtier (111), un appui de réception (22) sur lequel est engagé le tambour à câble (15).

2. Dispositif selon la revendication 1,
**caractérisé en ce que**
pour limiter le jeu axial de la roue à vis (12) sur le manchon de palier (17), la roue à vis (12) comporte un moyeu coaxial (18) dont les deux faces frontales axiales s'appuient avec un faible jeu axial d'un côté contre le fond de boîtier (111) et de l'autre contre l'élément de fixation (20).

3. Dispositif selon la revendication 2,
**caractérisé en ce que**
la paroi intérieure de la douille de palier (17) comporte un épaulement annulaire (171) venant radialement en saillie et
l'élément de fixation est une broche de fixation (20) avec une tête (201) et une tige (203) dont l'extrémité éloignée de la tête comporte des crochets d'encliquetage (31) s'escamotant radialement vers l'intérieur, et qui après introduction de la broche de fixation (20) dans la douille de palier (17) jusqu'à ce que la tête (201) vienne en butée contre la face frontale de la douille de palier (17) viennent prendre derrière l'épaulement annulaire (171).

4. Dispositif selon la revendication 3,
**caractérisé en ce que**
l'épaulement annulaire (171) est formé par la transition de deux segments de manchon (172, 173) réalisés dans le manchon de palier (17) et ayant un diamètre libre différent.

5. Dispositif selon l'une quelconque des revendications 2 à 4,
**caractérisé en ce que**
le moyeu (18) et l'embout de réception (22) du tambour à câble sont injectés en une seule pièce sur la roue à vis (12) fabriquée comme pièce en matière plastique injectée.

6. Dispositif selon l'une quelconque des revendications 2 à 5,
**caractérisé en ce qu'**
une douille de palier (19) avant du jeu radial de rotation dans le moyeu (18), est montée et de préférence en étant pressée sur le manchon de palier (17).

7. Dispositif selon l'une quelconque des revendications 1 à 6,
**caractérisé en ce que**
l'embout de réception (22) du tambour à câble comporte à son extrémité libre des branches élastiques (27) venant en saillie avec des becs de préhension (271)par l'arrière qui bloquent axialement le tambour à câble (15) sur l'embout de réception (22).

8. Dispositif selon la revendication 7,
**caractérisé en ce que**
le tambour à câble (15) est tenu par une entretoise de support (24) réalisée en une seule pièce avec le tambour à câble (15),
l'entretoise de support (24) comportant un cylindre (25) formé sur celle-ci avec une denture extérieure (251) pour venir s'engager par une liaison de forme dans la denture intérieure (221) de l'embout de réception (22) et
l'entretoise de support (24) comporte des passages (26) pour les branches élastiques (27) dont les becs de préhension par l'arrière (271) passent radialement par-dessus l'entretoise de support (24) sur sa face arrière à l'opposé de la roue à vis (12).

9. Dispositif selon l'une quelconque des revendications 1 à 8,
**caractérisé en ce que**
le boîtier de transmission (11) est fermé par un couvercle (28) entourant avec du jeu radial l'embout de réception (22) du tambour à câble et le couvercle (28) du boîtier est rendu étanche par rapport à l'embout de réception (22).

10. Dispositif selon la revendication 9,
**caractérisé en ce que**
la face inférieure du couvercle de boîtier (28) tournée vers le boîtier de transmission (11) est recouverte par une rondelle d'étanchéité (29) de forme annulaire dont le bord intérieur comporte un bourrelet d'étanchéité (291) qui vient dans l'intervalle annulaire entre le couvercle de boîtier (28) et l'embout de réception (22) en s'appliquant sous pression contre l'enveloppe extérieure de l'embout de réception (22).
